Europäisches Patentamt

**European Patent Office**

Office européen des brevets

(11) Publication number: **0 042 186**
**A1**

(12) **EUROPEAN PATENT APPLICATION**

(21) Application number: **81200562.7**

(22) Date of filing: **25.05.81**

(51) Int. Cl.³: **G 01 F 23/28**

(30) Priority: **13.06.80 GB 8019357**

(43) Date of publication of application: **23.12.81**
**Bulletin 81/51**

(84) Designated Contracting States: **DE FR GB IT NL**

(71) Applicant: **SHELL INTERNATIONALE RESEARCH MAATSCHAPPIJ B.V., Carel van Bylandtlaan 30, NL-2596 HR DEN HAAG (NL)**

(72) Inventor: **Cole, John Bernhard, Strauszplantsoen 14, NL-2253 CG Voorschoten (NL)**

(74) Representative: **Keuzenkamp, Abraham et al, P.O. Box 302, NL-2501 CH Den Haag (NL)**

(54) **A method and apparatus for measuring the position of an interface between different materials by frequency domain reflectometry.**

(57) An apparatus and a method for determining the position of an interface (5b) between different materials (5, 5a). The apparatus has been provided with at least one transmission line consisting of a pair of electrodes (1, 2), passing through said interface (5b); means (7) adapted to generate a continuous oscillation through the transmission line and comprising means for measuring the period of the continuous oscillation generated by said generating means (7). The method comprises the steps of generating pulses through the transmission line, thus generating a continuous oscillation; measuring the period of the generated oscillation and deriving therefrom an indication of the position of said interface (5b).

EP 0 042 186 A1

ACTORUM AG

1

A METHOD AND APPARATUS FOR MEASURING THE POSITION
OF AN INTERFACE BETWEEN DIFFERENT MATERIALS BY
FREQUENCY DOMAIN REFLECTOMETRY

The invention relates to a method and an apparatus for
measuring the position of an interface between different
materials by frequency domain reflectometry.

There are many devices which are presently available for
measuring the interface positions between two or more different
materials. Such devices may be used for example to determine
the level of a material being present in a vessel or container.

Various techniques are known to provide such level or
interface position measurements. One of these known techniques
is the electrical transmission line technique.

According to said technique a pair of electrodes, forming
a transmission line, are partially immersed in a first material
for example a liquid in a vessel or container. Above said first
material a second material for example gas is present in the
vessel or container. Electrical pulses are impressed on the
electrodes by any suitable means and are propagated through the
transmission line. These pulses are reflected partially from
impedance discontinuities being present in the transmission
line. Said discontinuities are introduced in the transmission
line by interface levels between different materials for
example liquid/gas interfaces in a container or vessel as a
result of differing dielectric constants of both materials.

The propagation velocity of the pulses in the said second
material for example gas is known and subsequently the liquid
level can be determined from the transmission reflection time
interval of a pulse impressed on the pair of electrodes. The
location of the interface is determined by measuring the time
interval between the generation of such pulse and the return
of a reflection caused by the impedance change, where the
transmission line passes through the interface.

This technique is expensive and not particularly accurate, because the time measurement should be extremely precise.

It is therefore an object of the invention to provide a method and an apparatus for measuring the level of a material or position of an interface between different materials in a very accurate and cheap manner.

It is another object of the invention to provide a self-calibrating apparatus for level gauging which is applicable to a wide range of materials and comprises low cost electronics and an electrode assembly, that is robust and cheap to manufacture, because said electrodes do not need to be very accurately manufactured.

It is still another object of the invention to provide an apparatus for leval gauging, using very little electrical power and low voltage, so that the apparatus can be made intrinsically safe against ignition hazards.

It is still another object of the invention to provide an apparatus for level gauging, which is tolerant of changes and inhomogeneities of permittivity in the liquid and which is less sensitive to electrode fouling than known devices.

The invention therefore comprises an apparatus for determining the position of an interface between different materials characterized by at least one transmission line consisting of a pair of electrodes, passing through said interface; means adapted to generate a continuous oscillation through the transmission line, and comprising means for measuring the period of the continuous oscillation generated by said generating means.

Further the invention comprises a method for determining the position of an interface between different materials, characterized by the steps of generating pulses through a transmission line consisting of a pair of electrodes, thus generating a continuous oscillation; measuring the period of the generated oscillation and deriving therefrom an indication of the position of said interface.

The invention is based upon the observation of oscillation signals in the so-called "frequency domain" and in particular upon measuring the period of a continuous oscillation generated by a suitable means for example an oscillator. The expression "frequency domain" is well known to those skilled in the art and will not be described in detail.

In particular a tunnel diode can be used as an oscillator in a very advantageous manner. Its operation and voltage-current characteristic are well known to those skilled in the art and will therefore not be described here in detail.

For part of the characteristic the diode current falls with increasing voltage, so its differential resistance is negative. The diode is triggered by pulses of a predetermined amplitude which are reflected from any point, at which the impedance of the transmission line changes. After a suitable choice of the operating point of the tunnel diode the result is a continuous oscillation.

It can be shown that the period of such an oscillation can be expressed as follows: $\tau = 4\ L/C_o$, wherein $\tau$ = oscillation period, L = length of the transmission line being not immersed, $C_o$ = velocity of propagation of the pulses $\simeq 3 \times 10^8$ ms$^{-1}$. So, if only $\tau$ is measured, L can already be derived from the above equation. This derivation may be obtained in any suitable way, for example by means of a digital processor. From the above equation it will be clear that L is given independent of $\varepsilon$. $\varepsilon$ represents the permittivity of the liquid. The measurement of the said period $\tau$ may for example be determined by comparison with the period of a known reference frequency. Such a reference frequency may be generated by any suitable means, for example a quarts crystal.

The present invention will now be described by way of example in more detail with reference to the accompanying drawings, in which

fig. 1 shows schematically the principle of an apparatus for level gauging according to the invention;

4

fig. 2 shows an example of an embodiment of the level gauging apparatus according to the invention;

fig. 3 shows the upper part of the embodiment of fig. 2 in more detail.

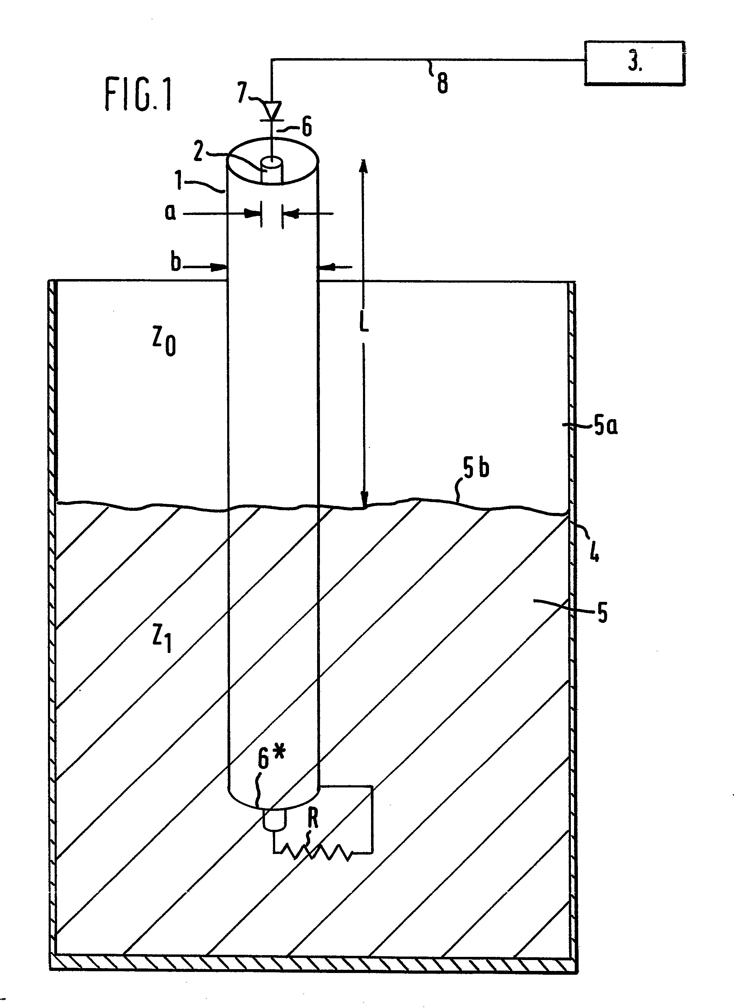

With reference now to fig. 1 a container or vessel 4 is shown, which may be any suitable storage tank or any other material-containing vessel.

The container 4 is filled with any suitable material for example a liquid 5 having a permittivity ε. Above the liquid 5 a gas 5a is present. So a gas-liquid interface 5b is present in the container 4. A probe consisting of a central electrode 2 of any suitable electrically conducting material is surrounded by a co-axial conducting shield electrode 1. Said shield electrode is constructed of any suitable electrically conducting material and is spaced from the electrode 2 by suitable spacers (not shown). Both co-axial electrodes 1 and 2 form a transmission line of characteristic impedance $Z_0$ (in ohms) above the liquid surface. This impedance $Z_0$ is dependent on the outer diameters a and b of the electrodes 1 and 2, respectively. The probe is immersed in the liquid 5. The liquid must be in sufficiently close contact with the probe to substantially change the impedance of the transmission line at the point where it is immersed in the liquid. If the liquid has a permittivity ε then below the liquid surface a characteristic impedance of the transmission line $Z_1 = Z_0 . \varepsilon^{-\frac{1}{2}}$ exists. This relation is known to those skilled in the art and will not be explained further.

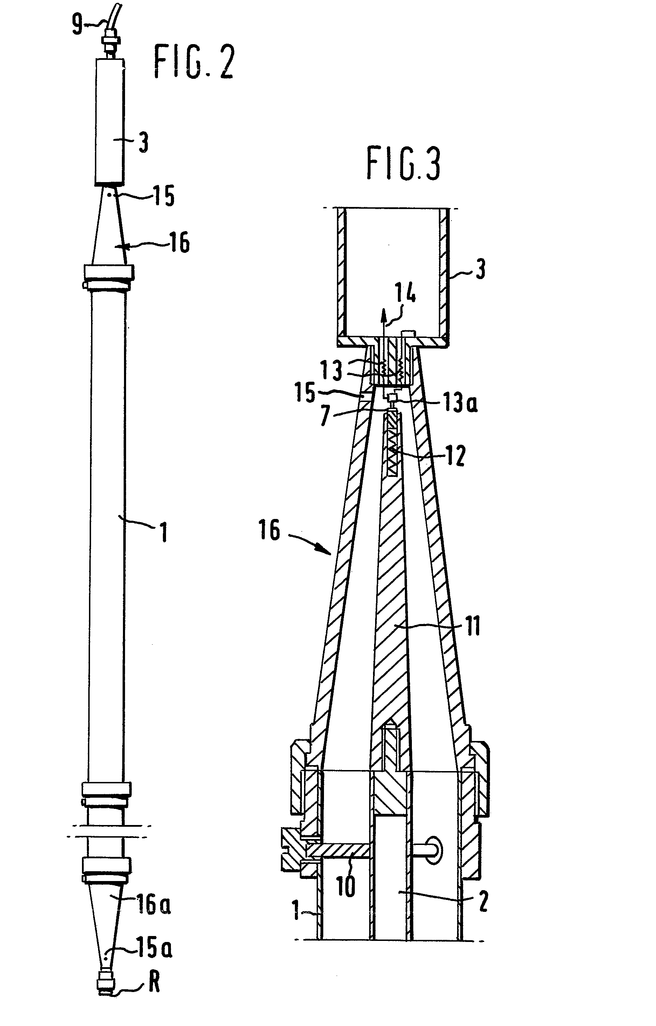

Any means 6 suitable for the purpose at the exterior portion of the transmission line connects the central conductor (electrode) 2 of the transmission line to a tunnel diode 7. The tunnel diode is fed by any suitable direct current bias (for example 0.1 volt; not shown). The shield electrode 1 is connected by any suitable means to the ground (not shown). The tunnel diode is connected by any suitable means 8 to a suitable electronic unit 3, which will be described with reference to fig. 2.

As already described earlier, the tunnel diode emits signals through the transmission line until they reach a point at which an impedance change in the line exists and a portion of these signals travelling down to the liquid surface will be reflected from points of change of impedance of the transmission line with a certain reflection coefficient and will trigger the diode to generate a continuous oscillation. The period of the oscillation from the tunnel diode is determined by means of comparison with the known period of the frequency of a quartz crystal (not shown). The remainder of the emitted signals continues to the end $6^x$ of the transmission line to where it encounters a terminating resistance R matched to the impedance of the transmission line. It is known to those skilled in the art that at the end $6^x$ the signals in the transmission line will not be reflected if the terminating resistance R equals $Z_1$.

Fig. 2 shows an example of an embodiment of the apparatus according to the invention. The same reference numbers as in fig. 1 have been used.

The terminating resistor R and the electronic unit 3 have been represented. The upper end 16, respectively lower end 16a, of the probe may be provided with vent holes 15, respectively 15a, to allow liquid to move between the conductors 1 and 2. (The conductor 2 has not been shown in fig. 2). The upper end 16 of the probe comprises the tunnel diode (not shown).

The probe is made 50 cm long, 3.5 cm outer diameter sections with screw couplings, so that any required number can be fitted together.

The electronic unit 3 is connected to an indicator (not shown) by any means 9 suitable for the purpose. The indicator may be designed in such a way that a direct indication in either cm up to 100 m, or mm up to 10 m may be selected. A shunt zener safety barrier (not shown) may be interposed between the indicator and the gauge.

Said electronic unit 3 amplifies the diode signal and divides the frequency by a suitable factor, for example one

6

hundred. This may be done by any circuit suitable for the purpose (not shown).

Where the gauge frequency will be in the range of 1 MHz to 100 MHz, the transmitted frequency is in the range of 10 KHz to 1 MHz, so that low-cost cable can be used for transmission over long distances. The design of the apparatus is arranged so, that power may be applied along the same wire that transmits the level signal.

Fig. 3 shows an enlarged view of the upper part 16 of the probe as represented in fig. 2.

The inner conductor (electrode) 2 is supported at 50 cm intervals by groups of three polytetrafluorethylene fingers 10.

The diode 7 is connected through suitable resistors 13 to the electronic unit 3. The diode is fitted into a support 11 through a helical spring 12. The diode is connected through a contact 13a and a line 14 to the circuits of the electronic unit 3 (not shown).

It will be appreciated that any other suitable embodiments of the probe are possible, for example the two conductors need not to be coaxial, but may consist of a pair of parallel wires. If desirable the conductors can be insulated without affecting the operating of the apparatus.

In other configurations the container wall may form one side of the transmission line.

In all cases, however, at least one conductor of the transmission line should be substantially surrounded by the material, the level of which is to be measured. The material must be in sufficient close contact to substantially change the impedance of the transmission line at the point where it is immersed in the said material.

In most applications only one central indicator may be used for several level gauges. If one central indicator is used for several level gauges for each of said gauges a separate adjustment may be present, that allows the zero level to be aligned with a required datum, to compensate for any differences in the mechanical mounting or different diode switching speeds between the gauges. Further, it will be appreciated that any oscillation period measuring manner suitable for the purpose can be used. The period of the generated oscillation may for example be compared with the time base of an oscilloscope.

The vessel or container may be filled with any material suitable for the purpose, such as salt water, fresh water, crude oils, products, liquefied gases and all manner of mixtures reacting, fermenting and separating, etc.

It will be appreciated that the sections of the probe may have any length and diameter suitable for the purpose. Further, the diode may be fitted into the probe by any means suitable for the purpose.

Various modifications of the invention will become apparent to those skilled in the art from the foregoing description and accompanying drawings.

Such modifications are intended to fall within the scope of the appended claims.

C L A I M S

1. An apparatus for determining the position of an interface between different materials, characterized by at least one transmission line consisting of a pair of electrodes, passing through said interface; means adapted to generate a continuous oscillation through the transmission line, and comprising means for measuring the period of the continuous oscillation generated by said generating means.

2. The apparatus as claimed in claim 1, characterized in that the oscillation generating means is a tunnel diode, which is switched by pulses of a predetermined amplitude, reflected from any point, at which the impedance of said transmission line changes by some predetermined amount.

3. The apparatus as claimed in claim 1 or 2, characterized in that a means is adapted to generate a reference frequency for comparison with the said oscillation period.

4. The apparatus as claimed in claim 3, characterized in that said means is a quartz crystal.

5. The apparatus as claimed in any one of claims 1-4, characterized by a means being adapted to derive an indication of the position of said interface from the measured continuous oscillation periods.

6. The apparatus as claimed in any one of claims 1-5, characterized in that said material interface is contained within a material container or vessel.

7. The apparatus as claimed in claim 6, characterized in that the said interface is a gas-liquid interface and wherein the measured position of said interface represents the level of the liquid in the vessel or container.

8. A method for determining the position of an interface between different materials, characterized by the steps of generating pulses through a transmission line consisting of a pair of electrodes, thus generating a continuous oscillation;

0042186

9

measuring the period of the generated oscillation and deriving therefrom an indication of the position of said interface.

9.   The method as claimed in claim 8, characterized in that the oscillation period is measured by comparison with the known period of a reference frequency.

10.   The method as claimed in claim 9, characterized in that the reference frequency is obtained from a quartz crystal.

1.   The method as claimed in any one of claims 8-10, characterized in that the said position indication is obtained by means of a digital processor.

12.   The method as claimed in any one of claims 8-11, characterized in that the position indication is represented in a central indicator.

13.   The method as claimed in any one of claims 7-10, characterized in that said material interfaces are contained within a material container or vessel.

0042186

FIG.1

0042186

FIG.2

FIG.3

## European Patent Office

## EUROPEAN SEARCH REPORT

| DOCUMENTS CONSIDERED TO BE RELEVANT | | | CLASSIFICATION OF THE APPLICATION (Int. Cl.³) |
|---|---|---|---|
| Category | Citation of document with indication, where appropriate, of relevant passages | Relevant to claim | |
| X | <u>US - A - 3 695 107</u> (HERTZ et al.)<br>+ Abstract; fig. + | 1-13 | G 01 F 23/28 |
| X | <u>US - A - 3 424 002</u> (JOHNSON)<br>+ Fig. 1; column 2, lines 60-64 + | 1-13 | |

|  |  |
|---|---|
|  | TECHNICAL FIELDS SEARCHED (Int. Cl.³) |
|  | G 01 F 23/00 |

CATEGORY OF CITED DOCUMENTS

X: particularly relevant
A: technological background
O: non-written disclosur
P: intermediate document
T: theory or principle underlying the invention
E: conflicting application
D: document cited in the application
L: citation for other reasons

&: member of the same patent family, corresponding document

| X | The present search report has been drawn up for all claims |
|---|---|

| Place of search | Date of completion of the search | Examiner |
|---|---|---|
| VIENNA | 21-08-1981 | STÖGER |

EPO Form 1503.1  06.78